# EUROPÄISCHE PATENTSCHRIFT

(11) **EP 2 601 499 B1**
(45) Veröffentlichungstag und Bekanntmachung des Hinweises auf die Patenterteilung: **25.02.2015**
(21) Anmeldenummer: 11785355.6
(22) Anmeldetag: 27.10.2011
(51) Int. Cl.: G01M 3/00, G06F 17/10, G01M 3/28, F17D 5/02, G01M 3/26

(54) **LECKAGEERKENNUNG UND LECKAGEORTUNG IN VERSORGUNGSNETZEN**
LEAKAGE DETECTION AND LEAKAGE LOCATION IN SUPPLY NETWORKS
DÉTECTION ET LOCALISATION DE FUITES DANS DES RÉSEAUX D'ALIMENTATION

(30) Priorität: 05.11.2010 DE 102010043482
(43) Veröffentlichungstag der Anmeldung: 12.06.2013
(73) Patentinhaber: Siemens Aktiengesellschaft, 80333 München (DE)
(72) Erfinder: HANSS, Holger, 76726 Germersheim (DE); MAJEWSKI, Kurt, 81541 München (DE); NIEVELER, Jörg, 81547 München (DE); WEHRSTEDT, Jan Christoph, 81829 München (DE)
(86) Internationale Anmeldenummer: PCT/EP2011/068817
(87) Internationale Veröffentlichungsnummer: WO 2012/059390

(56) Entgegenhaltungen:
- DE-B3-102008 048 747
- JP-A- 4 093 743

## Beschreibung

Die vorliegende Erfindung betrifft ein Verfahren, eine Verwendung und eine Vorrichtung zur Leckageerkennung und Leckageortung in einem Gebiet eines Versorgungsnetzes.

Trinkwasser gehört mittlerweile zu einem der wichtigsten Güter im einundzwanzigsten Jahrhundert. In Wasserverteilungsnetzen treten aber teilweise erhebliche Wasserverluste auf.

Die Bewahrung dieses Gutes stellt eine große Herausforderung an die Leckerkennung und- Ortung in Wassernetzwerken dar. Das Erkennen von Wasserverlusten durch eine Massenbilanz, bei dem alle Einspeisemengen und insbesondere die Wasserabnahmemengen aller individuellen Wasserverbraucher gemessen werden, überschreitet vom Aufwand die Grenzen der Machbarkeit. Des Weiteren erfordern Gesetzeslagen zeitgenaue Verbrauchsmessungen und Verbrauchsaufzeichnungen aller Kundendaten.

Herkömmlicher Weise wird zur Detektion von Leckagen in Wassernetzwerken lediglich die gesamte Wassermenge, die ins Netzwerk fließt, zu einer bestimmten Zeit, wie dies beispielsweise der Zeitraum nachts zwischen 2 und 4 Uhr ist, gemessen. Diese Werte erzeugen eine Zeitreihe, die darauf hin analysiert wird, ob ein plötzlicher Anstieg des Verbrauchs und somit eine mögliche Leckage vorliegt. Eine Bilanzierung der Abnahmen des Systems ist herkömmlicher Weise nicht möglich. Es liegen Faustformeln zum typischen Wasserverbrauch bestimmter Konsumenten vor. Diese sind aber zum einen sehr allgemein und können, insbesondere zeitlich befristete, Sondereffekte nicht hinreichend genau berücksichtigen.

Die meist sehr großen Wasserversorgungsnetze werden üblicherweise in Wasserversorgungszonen unterteilt. Diese Zonen werden wiederum in Subzonen unterteilt, die, da dies durch britische Ingenieure geprägt ist, als district meter area (DMA) bezeichnet werden. Die DMAs werden so angelegt, dass diese nur einen Zufluss haben, dessen Durchfluss gemessen wird. Aus der Beobachtung dieser Durchflussmessung wird auf Unregelmäßigkeiten im Wasserverbrauch und somit auf Leckagen geschlossen. Konkret wird herkömmlicher Weise eine so genannte "night flow analysis" durchgeführt. Hierbei wird durch detaillierte Aufzeichnung der nächtlichen Zuflusswerte in eine DMA (z.B. alle 5 Sekunden zwischen 2:00 - 4:00 Uhr) ein minimaler Zuflusswert bestimmt, hier auch als Hintergrundverbrauch bezeichnet, der den normalen nächtlichen (Mindest-)Verbrauch und vorhandene (insbesondere auch kleine) Leckagen umfasst.

Auf Basis dieser minimalen Zuflusswerte in eine DMA während verbrauchsarmer Nachtzeiten, beispielsweise zwischen 2 und 4 Uhr, wobei dann lediglich ein Wert pro Nacht bereit gestellt wird, wird über Tage und Wochen hinweg eine Zeitreihe erstellt. Der, insbesondere plötzliche, Anstieg dieser minimalen Verbrauchswerte, der beispielsweise durch eine Schwellwertüberschreitung erkannt werden kann, kann als Ursache eine neue Leckage haben.

Zur Lokalisation oder Leckageortung wird zumeist ein Step Test durchgeführt. Hierzu trennt man zu Zeiten niedrigen Verbrauchs sukzessiv kleine Bereiche von der DMA und beobachtet die Veränderung des Verbrauchs. Bereiche, die zu einem starken unerklärlichen Abfall des Verbrauchs führen untersucht man dann weiter auf Leckagen.

Alternativ kann mit Geräuschmessern vor Ort das Wassersystem auf Leckagen abgehört werden und durch Betrachtung der Geräuschkorrelation die Leckagestelle berechnet werden.

Beide genannte herkömmliche Verfahren eignen sich nicht für eine permanente Überwachung. Step Tests sind mit einem hohen Aufwand verbunden, indem die betroffenen Haushalte von der Abschaltung informiert werden müssen und eine Ersatzversorgung sichergestellt werden muss. Geräuschemessung benötigt einen hohen Aufwand, da die Messungen nur von Spezialisten vor Ort durchgeführt werden können. Außerdem sind diese Untersuchungen immer nur lokal möglich. Zusätzlich können beide herkömmliche Verfahren nur in Zeiten mit einem niedrigen Verbrauch angewendet werden, damit die Messungen nicht durch Verbrauchsschwankungen zu sehr gestört werden. Ein grundsätzliches Problem bei den gängigen Verfahren zur Leckageerkennung liegt darin, dass sehr häufig Fehlalarme gemeldet werden, dass also eine Leckage irrtümlicher Weise angenommen wurde (Fehler 2. Art). Die Aufwände zu einer Lokalisierung einer Leckage (Aussenden eines Suchtrupps, Akkusitische Ortung, Step Test bis hin zu Aufgrabungen und Bohrungen) werden in einem solchen Fall umsonst vorgenommen. Dies ist teuer und belästigt die Betroffenen.

Aus der deutschen Patentschrift DE 10 2008 048747 B3 (SIEMENS AG [DE]), 21. Januar 2010, ist ein Verfahren und eine Verwendung zur Leckageerkennung und Leckageortung in einem Gebiet eines Versorgungsnetzes bekannt, bei dem Zonen in Subzonen unterteilt werden, wobei die DMAs so angelegt werden, dass diese nur einen Zufluss haben, dessen Durchfluss gemessen wird. Die versorgerseitigen Zuflüsse in jede Zone oder jedes Gebiet und gegebenenfalls auch Abflüsse von dieser Zone in andere Zonen oder Gebiete werden hierbei über definierten Zeitspannen gemessen und aufsummiert.

Es ist Aufgabe der vorliegenden Erfindung ein Verfahren, eine Verwendung und eine Vorrichtung zur Erkennung von Leckagen in einem Versorgungsnetz bereitzustellen, die insbesondere die Wahrscheinlichkeit für Fehlalarme (Fehler 2. Art) reduzieren.

Die Aufgabe wird gelöst durch ein Verfahren zur Leckageerkennung und Leckageortung in einem Gebiet eines Versorgungsnetzes mit den Schritten:
a) Aufteilen des Versorgungsnetzes in Gebiete (DMA), die im Wesentlichen ein vergleichbares Verbrauchsprofil aufweisen, wobei für jedes Gebiet (DMA) der Gesamtwasserverbrauch gemessen werden kann;
b) Bestimmen einer Regressionskurve des Zuflusses für jeweils vergleichbaren Gebiete (DMA) basierend auf Vergangenheitswerten, von denen angenommen wird, dass das Versorgungsnetz leckfrei war, durch Methoden der robusten Regression und Bestimmen eines Vertrauensbereiches um die Regressionskurve, wobei Messwerte innerhalb des Vertrauensbereiches auf keine Leckage hinweisen;
c) Messen eines jeweiligen minimalen Zuflusses für jedes Gebiet (DMA) innerhalb einer festgelegten Messperiode;
d) Erstellen von Zeitreihen von Messwerten des minimalen Zuflusses für ausgewählte Gebiete (DMA) über eine Anzahl von Messperioden hinweg;
e) Vergleichen der Zeitreihen der Messwerte des minimalen Zuflusses mit der Regressionskurve, wobei Messwerte, die außerhalb des Vertrauensbereiches liegen auf das Vorhandensein einer Leckage im Versorgungsnetz hinweisen. Das Verfahren lässt sich leicht automatisieren und zusammen mit anderen jedes Gebiet separat betrachtende Verfahren (z.B. Kameraüberwachung, Drucksensorik) betreiben. Auch können dynamische, nicht periodische Sondereffekte (z.B. höherer Wasserverbrauch bei Sportveranstaltungen im Fernsehen) berücksichtigt werden, wodurch die Fehlalarmrate weiterhin gesenkt wird.

Eine erste vorteilhafte Ausgestaltung der Erfindung liegt darin, dass die Zeitreihen der Messwerte in ein Koordinatensystem eingetragen werden, wobei jede Koordinatenachse ein Gebiet (DMA) repräsentiert, wobei die Lage eines Messwertes zu einer Koordinatenachse auf eine Leckage innerhalb des entsprechenden Gebietes (DMA) hinweist. Dadurch können mögliche Leckagen in einem Versorgungsnetz sehr leicht automatisch, aber auch visuell (z.B. an einem Überwachungsmonitor in einem Leitstand) erkannt werden.

Eine weitere vorteilhafte Ausgestaltung der Erfindung liegt darin, dass die Güte der Regressionskurve durch einen robusten Korrelationskoeffizienten festgelegt wird. Dadurch ist sichergestellt, dass Ausreißer in den Messreihen die Lage der Regressionskurve nur gering beeinflussen.

Eine weitere vorteilhafte Ausgestaltung der Erfindung liegt darin, dass es sich bei den Gebieten (DMA) auch um Virtuelle District Meter Areas (virtuelle Zonen) handeln kann. Bei virtuellen Zonen oder sog. virtuellen district meter areas (DMA) handelt es sich um Teilgebiete eines Netzes, deren Zuflüsse und Abflüsse mittels Durchflussmesser gemessen werden, wobei nicht gefordert wird, dass die Gebiete disjunkt sind. Es erfolgt eine sukzessive Auswertung der Zeitreihen für alle Gebiete und Erkennen von Leckagen in den Gebieten. Abschließend erfolgt ein Eingrenzen des Ortes der Leckage anhand der Leckageinformationen für die einzelnen Gebiete. Eine Leckageinformation ist eine Information darüber, ob in dem Gebiet eine Leckage erkannt wurde, oder nicht. Virtuelle district meter areas (virtuelle DMAs) unterscheiden sich von herkömmlichen Gebieten (DMAs) folgendermaßen. Bei der Unterteilung von Zonen in DMAs wurde herkömmlicher Weise stets versucht, diese so zu bilden, das sich lediglich ein Zufluss bzw. ein Zuflussrohr ergab und dieses über einen einzigen Sensor überwacht werden kann. In den Versorgungszonen werden an ausgewählten Stellen zusätzliche Durchflusssensoren so eingebaut, dass sich Teilstücke des Netzwerkes ergeben, deren Ein- und Ausflüsse gemessen werden können. Diese Teilstücke sollten ein gemeinsames Element besitzen. Die Teilstücke sollen sich überlagern und gemeinsame Durchflussmesser aufweisen. Derartige Teilstücke werden als virtuelle Zonen oder virtuelle DMAs bezeichnet.

Eine weitere vorteilhafte Ausgestaltung der Erfindung liegt darin, dass anstelle der Messwerte des minimalen Zuflusses der Gebiete, gleitende Mittelwerte oder der integrated flow (integrierter Fluss) verwendet werden. Bei der technischen Ausgestaltung wird auf diese Weise berücksichtigt, dass die einzelnen Messgrößen mit Messfehlern behaftet sind. Gleitende Mittelwerte besitzen eine Glättungseigenschaft. Durch die Mittelwerte können z.B. die schwankenden nächtlichen Toilettenbesuche ausgeglichen werden.

Eine weitere vorteilhafte Ausgestaltung der Erfindung liegt darin, dass die Messperiode beispielsweise von 2.00 bis 4.00 Uhr, von 0.00 bis 24.00 Uhr und/oder von 6.00 bis 18.00 Uhr ist. Bei einer Night Flow Analysis wird über alle Durchflussmesser bzw. Sensoren nachts, beispielsweise zwischen 2:00 und 4:00 der Durchfluss im Rahmen einer derartigen Analyse gemessen. Anstelle einer Untersuchung bei Nacht kann man für Integrated Flow Untersuchungen andere Zeitintervalle, beispielsweise 24 Stunden oder mehrere Messzeiträume während eines Tages betrachten. In diesem Fall lassen sich die obigen Verfahren ebenso anwenden, allerdings muss die Anzahl der Zeitreihen und die Periodenlänge der typischen Komponente angepasst werden. Eine Erweiterung des Messzeitraums zwischen 2:00 und 4:00 Uhr für einen minimalen Volumenstrom ist nicht sinnvoll, da die Zeitspanne vorab so gewählt wurde, dass erfindungsgemäß der minimale Verbrauch in dieses Zeitintervall fällt.

Eine weitere vorteilhafte Ausgestaltung der Erfindung liegt darin, dass bei Vorliegen eines Messwertes außerhalb des Vertrauensbereiches ein Alarm ausgelöst wird. Somit kann z.B. in einer Leitwarte des Versorgungsnetzes oder eines zu versorgenden Gebietes ein Alarm erfolgen und die entsprechenden Gegenmaßnahmen (z.B. Lokalisieren und Abdichten, oder Umleiten des Mediums) können angestoßen werden. Auch ein automatisches Einleiten von Maßnahmen, basierend auf den Daten des Alarmes (Ort, Menge des Wasserschwundes, Anzahl der betroffenen Verbraucher) kann erfolgen.

Eine weitere vorteilhafte Ausgestaltung der Erfindung liegt in der Verwendung eines Verfahrens nach einem der Ansprüche 1 bis 6, für ein Infrastrukturnetz zum Transport eines Fluids. Die Messwerte für Fluide lassen sich durch entsprechende Sensorik (z.B. Druck- oder Durchflusssensoren) leicht und genau ermitteln und somit für zuverlässige Prognosen verwenden.

Eine weitere vorteilhafte Ausgestaltung der Erfindung liegt darin, dass das Infrastrukturnetz ein Wasserversorgungs- oder ein Gasversorgungs- oder ein Fernwärmenetz ist. Die Erfindung ist anwendbar auf alle Infrastrukturnetze, bei denen Fluide transportiert und verbraucht werden. Beispiele für derartige Infrastrukturnetze sind Gasversorgungs- und Fernwärmenetze.

Eine weitere vorteilhafte Ausgestaltung der Erfindung liegt in einer Vorrichtung zur Verwendung eines Verfahrens nach einem der Ansprüche 1 bis 6, die Vorrichtung umfassend:
a) Sensoren zum Messen eines jeweiligen minimalen Zuflusses für jedes Gebiet (DMA) innerhalb einer festgelegten Messperiode;
b) Mittel zum Erstellen von Zeitreihen von Messwerten des minimalen Zuflusses für ausgewählte Gebiete (DMA) über eine Anzahl von Messperioden hinweg;
c) Mittel zum Vergleichen der Zeitreihen der Messwerte des minimalen Zuflusses mit einer Referenzregressionskurve, wobei Messwerte, die außerhalb des Vertrauensbereiches liegen auf das Vorhandensein einer Leckage im Versorgungsnetz hinweisen. Die Vorrichtung lässt sich mit handelsüblichen Mitteln herstellen. Z.B. ist die entsprechende Sensorik in entsprechenden Baumärkten erhältlich, die Mittel zum Erstellen zum Vergleichen von Zeitreihen lassen sich auf Personal Computern und entsprechender Software (z.B. Tabellenkalkulations- oder Mathematikprogramme) realisieren.

Ein Ausführungsbeispiel der Erfindung ist in der Zeichnung dargestellt und wird im Folgenden erläutert.

Dabei zeigen:
- FIG 1: Ausführungsbeispiele für erfindungsgemäße Gebiete,
- FIG 2: ein Beispiel für eine Regressionskurve mit angrenzenden beispielhaften Vertrauensbereichen, und
- FIG 3: ein beispielhaftes Ablaufdiagramm zur Durchführung des erfindungsgemäßen Verfahrens.

Die Verringerung von Wasserverlusten stellt eine große Herausforderung an die Leckerkennung und Ortung in Wassernetzen dar. In Teilgebieten eines Netzes können Wasserverluste durch Durchflussmengenmessungen an allen Zu- und Abflüssen des Gebietes und Bildung einer Massenbilanz erkannt werden.

Solche Messungen überschreiten sowohl vom Aufwand wie auch von der Gesetzeslage (zeitgenaue Verbrauchsmessung und Aufzeichnung aller Kunden kann datenschutzrechtlich zu Problemen führen) die Grenzen der Machbarkeit. Nichts desto trotz ermöglichen neue günstigere Messgeräte die Überwachung physikalisch relevanter Werte wie Druck, Durchfluss etc. Diese Messungen können an zahlreichen Stellen im Wassernetz durchgeführt werden. Die während der vorgegebenen Zeiträume periodisch aufgenommenen Werte werden zu Zeitreihen zusammengefasst, welche mit statistischen Methoden auf Indizien für vorhandene oder neu entstandene Lecks untersucht werden. Wenn die statistische Auswertung einen Hinweis auf ein Leck (Leckage) gibt, so muss mittels einer Feinortung (z.B. durch Geräuschanalyse, Grabungen) im von den Sensoren eingegrenzten Bereich die genaue Verluststelle ermittelt und repariert werden. Da die Anzahl der Messstellen im Vergleich zur Anzahl der Wasserrohre klein ist, müssen unter Umständen eine große Anzahl von Rohren untersucht werden. Deswegen sollte die Häufigkeit eines Fehlalarms klein sein. Im Folgenden wird ein Ansatz vorgestellt, mit dem Fehlalarme (Fehler zweiter Art) durch Vergleich verschiedener Zeitreihen mit statistischen Methoden reduziert werden.

Die meist sehr großen Wasserversorgungsnetze werden in Wasserversorgungszonen (Gebiete) unterteilt. Diese Gebiete können wiederum in Subzonen unterteilt werden, die - da durch britische Ingenieure geprägt - als District Meter Area (DMA) bezeichnet werden. Die DMAs werden so angelegt, dass sie jeweils nur einen Zufluss haben, dessen Durchfluss gemessen wird. Alternativ können statt physikalischen DMAs auch virtuelle Zonen verwendet werden, die mehrere Zu- und Abflüsse aufweisen können. Aus der Beobachtung der Durchflussmessung wird auf Unregelmäßigkeiten im Wasserverbrauch und somit auf Leckagen geschlossen. Konkret wird eine sog. Night Flow Analysis durchgeführt. Aus den minimalen Zuflusswerten wird eine DMA während verbrauchsarmen Nachtzeiten durchgeführt, z.B. zwischen 02:00 und 04:00 Uhr. Bei einem Wert pro Nacht wird über Tage und Wochen hinweg eine Zeitreihe erstellt. Der (plötzliche) Anstieg dieser minimalen Verbrauchswerte, der z.B. durch eine Schwellwertüberschreitung erkannt werden kann, kann als Ursache eine neue Leckage haben.

Besondere Ereignisse, wie der Einsatz von Rasensprenklern, Sportereignisse oder Brauchtum während der Nachtmessung verursachen somit einen Anstieg des minimalen Zuflusses in verschiedenen DMAs. Somit wird für alle DMAs Alarm ausgelöst. Bisher muss ein solcher möglicher Fehlalarm von dem Benutzer des Systems erkannt und durch weitere Untersuchungen ausgesondert werden. Die vorliegende Erfindung ermöglicht ein automatisches Verfahren zur Erkennung netzwerkübergreifender Ereignisse zur Reduktion von Fehlalarmen bei der Leckageanalyse.

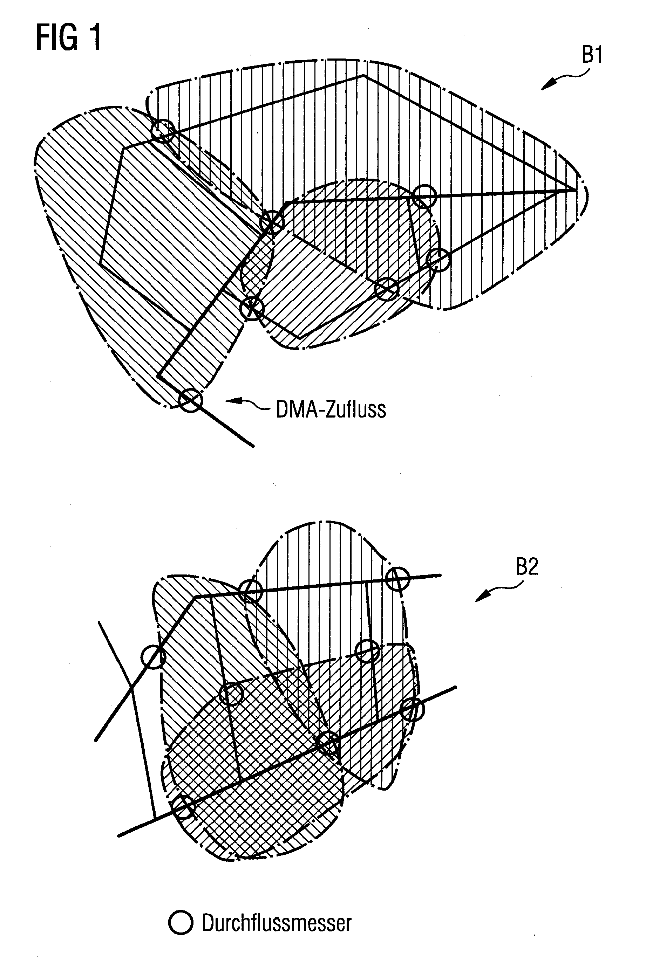

Figur 1 zeigt zwei Ausführungsbeispiele B1, B2 für erfindungsgemäße Gebiete DMA. Bei einem Gebiet DMA kann es sich um ein physikalisch räumliches Gebiet des Versorgungsnetzes handeln, oder um eine virtuelle Zone. Virtuelle district meter areas (virtuelle DMAs) unterscheiden sich von herkömmlichen Gebieten (DMA) folgendermaßen. Bei der Unterteilung des Versorgungsnetzes in Gebiete (DMAs) wurde herkömmlicher Weise stets versucht, diese so zu bilden, das sich lediglich ein Zufluss bzw. ein Zuflussrohr ergab und dieses über einen einzigen Sensor überwacht werden kann. In den Versorgungszonen werden an ausgewählten Stellen zusätzliche Durchflusssensoren so eingebaut, dass sich Teilstücke des Netzwerkes ergeben, deren Ein- und Ausflüsse gemessen werden können. Diese Teilstücke sollten ein gemeinsames Element besitzen. Die Teilstücke sollen sich überlagern und gemeinsame Durchflussmesser aufweisen. Derartige Teilstücke werden als virtuelle Zonen oder virtuelle DMAs bezeichnet.

Mit der Vorgehensweise der Schaffung von virtuellen Zonen (virtuellen Gebieten) wird ein universelles Verfahren vorgestellt, Versorgungsnetze so zu unterteilen, das Teilgebiete, wie es beispielsweise ein oder mehrere Leitungsabschnitte ist/sind, mehrfach hinsichtlich der Leckageerkennung überwacht werden können. Die Überwachung einer jeden virtuellen Zone funktioniert nach dem gleichen Prinzip und kann in einer technischen Lösung entsprechend mehrfach angewendet werden. Die Unterteilung eines Netzwerkes in virtuelle Zonen liefert den Vorteil, dass bis auf den Einbau von Durchflussmessern, keine Änderung am bestehenden Netz vorgenommen werden müssen. Ein weiterer Vorteil besteht darin, dass ohne den Betrieb des Versorgungsnetzwerks zu stören, oder umständliche, kostenintensive Messungen vor Ort durchzuführen, die Leckageerkennung automatisiert ablaufen kann.

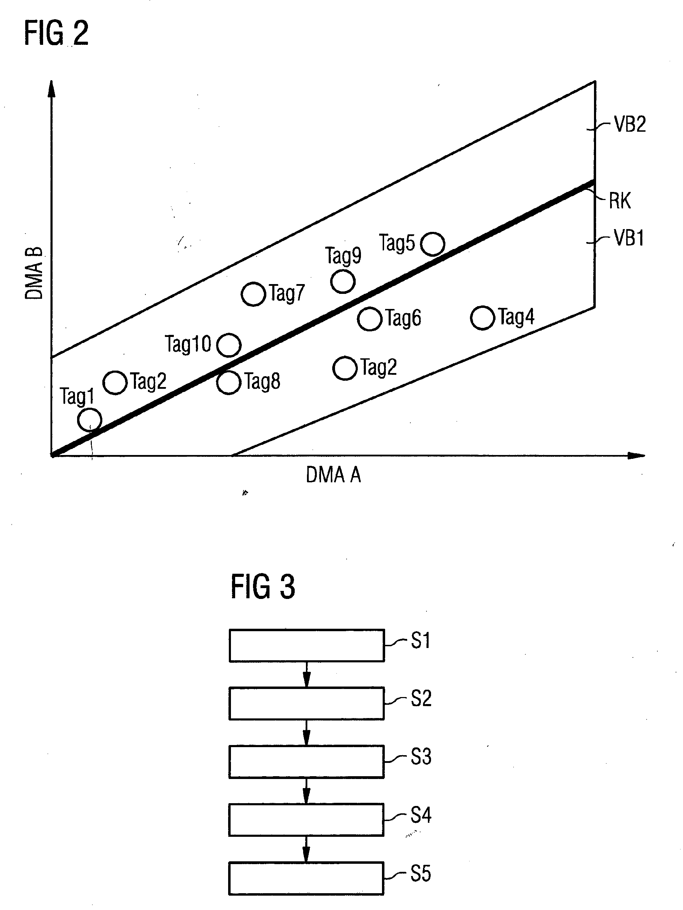

Figur 2 zeigt ein Beispiel für eine Regressionskurve RK mit angrenzenden beispielhaften Vertrauensbereichen VB1, VB2 und eingetragenen Messwerten. Im Diagramm nach Figur 2 sind Messwerte für das Gebiet A (DMA A) und das Gebiet B (DMA B) eingetragen. Im Diagramm nach Figur 2 ist jeweils für einen Tag ein Messwert eingetragen. Weiterhin handelt es sich in Figur 2 um den Spezialfall einer linearen Regression. Deshalb ist die Regressionskurve RK eine Gerade. Die Vertrauensbereiche VB1, VB2 bezüglich eines Gebietes (in Figur 2: VB1 bezüglich DMA A und VB2 bezüglich DMA B) können jeweils den gleichen Abstand zur Regressionskurve RK haben. Dies ist aber nicht erforderlich. Die Vertrauensbereiche VB1, VB2 für bestimmte Gebiete können auch unterschiedlich dimensioniert und abgestimmt sein auf die jeweiligen Erfordernisse eines Gebietes. So kann z.B. bei der Dimensionierung eines Vertrauensbereiches berücksichtigt werden, dass für das betreffende Gebiet die Verrohrung und die Infrastruktur neu und somit weniger anfällig ist und für ein anderes Gebiet eine alte und somit fehleranfällige Infrastruktur vorliegt.

Es werden jeweils Zeitreihen, die zu unabhängigen Gebieten (DMAs) gehören, verglichen. Diese Gebiete DMA sollten ein vergleichbares Verbrauchsprofil haben. Dazu werden die dazugehörigen Zeitreihen so in eine Zeitreihe zusammengefasst, dass für jeden Tag ein Wertetupel entsteht. In Figur 2 ist das Vorgehen für zwei Zeitreihen beschrieben.

N Vergangenheitswerte, von denen angenommen wird, dass das Netz zu dem Aufnahmezeitpunkt leckfrei war, werden so in ein Koordinatensystem gezeichnet, dass die Werte, die zum ersten Gebiet DMA A gehören, auf die X-Achse und die, die zum zweiten Gebiet DMA B gehören, auf die Y-Achse gezeichnet sind. Dadurch entsteht eine Punktwolke. Mit Methoden der robusten Regression wird eine Ausgleichskurve in die Punktwolke gelegt. Ein robuster Korrelationskoeffizient drückt die Güte der Approximation an. Der Vorteil von Ansetzen der robusten Regression liegt auch darin, dass Ausreißer den für die Kalibrierung verwendeten Daten die Lage der Regressionskurve RK nur gering beeinflussen. Im Spezialfall einer linearen Regression ist die Regressionskurve eine Gerade bzw. eine Hyperebene. Die Regressionskurve RK kann z.B. durch die kleinste Quadrate-Methode bestimmt werden. Um die Regressionskurve RK wird ein Vertrauensbereich VB gelegt. Der Vertrauensbereich kann z.B. empirisch festgelegt werden. Messwerte außerhalb des Vertrauensbereiches VB weisen auf eine Leckage hin und führen zu einem Alarm.

Die Bestimmung der Regressionskurve RK und das Festlegen des Vertrauensbereiches VB stellt somit eine Initialisierung dar. Für neue Messwerte wird entschieden, ob sie zu dieser Verteilung passen. Dazu wird der Abstand des Messwertes zur Regressionskurve gemessen. Überschreitet der Abstand einen vom Benutzer wählbaren Wert VB, wird ein Alarm ausgelöst und es ist ein Hinweis auf eine Leckage gegeben. Liegt der Wert unterhalb der Kurve, ist die mögliche Leckage im Gebiet DMA A, andernfalls im Gebiet DMA B nach Beispiel in Figur 2. Das hier vorgestellte Verfahren kann mit anderen jede Zone separat betrachtenden Verfahren betrieben werden und somit zum Vermeiden von Fehlalarmen bei der Leckageerkennung eingesetzt werden. Die mögliche Identifikation von Sonderereignissen hat den Vorteil, dass bis auf eine Installation von Sensoren keine Veränderungen am bestehenden Wassernetz vorgenommen werden müssen. Ein weiterer Vorteil liegt darin, dass ohne den Betrieb des Wassernetzwerks zu stören oder umständliche kostenintensive Messungen vor Ort durchzuführen, die Leckageerkennung automatisiert ablaufen kann. Das Verfahren kann prinzipiell für alle Infrastrukturnetze, bei denen Fluide oder Gase transportiert werden, verwendet werden. Beispiele hierfür sind Gasversorgungs- und Fernwärmenetze.

Ein Alarm kann z.B. in einer Leiteinheit zur Überwachung des Versorgungsnetzes empfangen werden, und automatisch weitere Maßnahmen in Bewegung setzen (z.B. Schließen von Ventilen, Umleiten des Fluids).

Figur 3 zeigt ein beispielhaftes Ablaufdiagramm zur Durchführung des erfindungsgemäßen Verfahrens. Im Schritt S1 erfolgt die Aufteilung des Versorgungsnetzes in Gebiete (DMAs). Die Gebiete sollen im Wesentlichen ein vergleichbares Vergleichsprofil aufweisen, sowie jeweils nur einen Zufluss. Im Schritt S2 wird eine Regressionskurve RK des Zuflusses für jeweils vergleichbare Gebiete, basierend auf Vergangenheitswerten, bestimmt. Es wird dabei angenommen, dass das Versorgungsnetz leckfrei war, bei der Abnahme der Werte für die Kurve. Die Kurve kann z.B. mit Methoden der kleinsten Quadrate bestimmt werden. Ein Vertrauensbereich VB um die Regressionskurve RK, wobei Messwerte innerhalb des Vertrauensbereiches VB auf keine Leckage hinweisen, wird über empirische Erfahrungswerte bestimmt. Im Schritt S3 erfolgt die Messung eines jeweiligen minimalen Zuflusses für jedes Gebiet DMA innerhalb einer festgelegten Messperiode. Bei der Messperiode kann es sich z.B. um jeweils eine Messung pro Tag in einem Gebiet handeln. Im Schritt S4 werden Zeitreihen von Messwerten des minimalen Zuflusses für ausgewählte Gebiete über eine Anzahl von Messperioden hinweg erstellt. Im Schritt S5 werden Zeitreihen von neuen Messwerten des minimalen Zuflusses mit der Regressionskurve RK verglichen, wobei Messwerte, die außerhalb des Vertrauensbereiches VB liegen, auf das Vorhandensein einer Leckage im Versorgungsnetz hinweisen.

Verfahren und Vorrichtung zur Leckageerkennung und Leckageortung in einem Gebiet eines Versorgungsnetzes (z.B. Wasserversorgungs-, Gasversorgungs- oder Fernwärmenetz), wobei mit robusten Regressionsverfahren Messwerte von Sensoren des Versorgungsnetzes auf das Vorhandensein von Leckagen statistisch analysiert werden. Insbesondere wird dabei die Fehlalarmrate (Fehler 2. Art) minimiert.

### Bezugszeichen

- B1, B2: Beispiel
- DMA: Gebiet
- RK: Regressionskurve
- VB1, VB2: Vertrauensbereich
- S1 - S5: Verfahrensschritt

## Patentansprüche

1. Verfahren zur Leckageerkennung und Leckageortung in einem Gebiet eines Versorgungsnetzes mit den Schritten:
a) Aufteilen des Versorgungsnetzes in Gebiete (DMA), die im Wesentlichen ein vergleichbares Verbrauchsprofil aufweisen, wobei für jedes Gebiet (DMA) der Gesamtwasserverbrauch gemessen werden kann;
b) Bestimmen einer Regressionskurve (RK) des Zuflusses für jeweils vergleichbaren Gebiete (DMA) basierend auf Vergangenheitswerten, von denen angenommen wird, dass das Versorgungsnetz leckfrei war, durch Methoden der robusten Regression und Bestimmen eines Vertrauensbereiches (VB1,VB2) um die Regressionskurve (RK), wobei Messwerte innerhalb des Vertrauensbereiches auf keine Leckage hinweisen;
c) Messen eines jeweiligen minimalen Zuflusses für jedes Gebiet (DMA) innerhalb einer festgelegten Messperiode;
d) Erstellen von Zeitreihen von Messwerten des minimalen Zuflusses für ausgewählte Gebiete (DMA) über eine Anzahl von Messperioden hinweg, wobei für jedes Gebiet (DMA) der Gesamtverbrauch gemessen wird;
e) Vergleichen der Zeitreihen der Messwerte des minimalen Zuflusses mit der Regressionskurve (RK), wobei Messwerte, die außerhalb des Vertrauensbereiches (VB1,VB2)
liegen, auf das Vorhandensein einer Leckage im Versorgungsnetz hinweisen.

2. Verfahren nach Anspruch 1,
**dadurch gekennzeichnet, dass**
die Zeitreihen der Messwerte in ein Koordinatensystem eingetragen werden, wobei jede Koordinatenachse ein Gebiet (DMA) repräsentiert, wobei die Lage eines Messwertes zu einer Koordinatenachse auf eine Leckage innerhalb des entsprechenden Gebietes (DMA) hinweist.

3. Verfahren nach einem der vorstehenden Ansprüche,
**dadurch gekennzeichnet, dass**
die Güte der Regressionskurve (RK) durch einen robusten Korrelationskoeffizienten festgelegt wird.

4. Verfahren nach einem der vorstehenden Ansprüche,
**dadurch gekennzeichnet, dass**
es sich bei den Gebieten (DMA) auch um Virtuelle District Meter Areas handeln kann.

5. Verfahren nach einem der vorstehenden Ansprüche,
**dadurch gekennzeichnet, dass** anstelle der Messwerte des minimalen Zuflusses der Gebiete, gleitende Mittelwerte oder der integrated flow verwendet werden, wobei für jedes Gebiet (DMA) der Gesamtverbrauch gemessen wird.

6. Verfahren nach einem der vorstehenden Ansprüche,
**dadurch gekennzeichnet, dass**
die Messperiode beispielsweise von 2.00 bis 4.00 Uhr, von 0.00 bis 24.00 Uhr und/oder von 6.00 bis 18.00 Uhr ist.

7. Verfahren nach einem der vorstehenden Ansprüche,
**dadurch gekennzeichnet, dass**
bei Vorliegen eines Messwertes außerhalb des Vertrauensbereiches (VB1,VB2) ein Alarm ausgelöst wird.

8. Verwendung eines Verfahrens nach einem der Ansprüche 1 bis 7, für ein Infrastrukturnetz zum Transport eines Fluids.

9. Verwendung nach Anspruch 8,
**dadurch gekennzeichnet, dass**
das Infrastrukturnetz ein Wasserversorgungs- oder ein Gasversorgungs- oder ein Fernwärmenetz ist.

10. Vorrichtung zur Verwendung eines Verfahrens nach einem der Ansprüche 1 bis 7, die Vorrichtung umfassend:
a) Sensoren zum Messen eines jeweiligen minimalen Zuflusses für jedes Gebiet (DMA) innerhalb einer festgelegten Messperiode, wobei für jedes Gebiet (DMA) der Gesamtverbrauch gemessen wird;
b) Mittel zum Erstellen von Zeitreihen von Messwerten des minimalen Zuflusses für ausgewählte Gebiete (DMA) über eine Anzahl von Messperioden hinweg;
c) Mittel zum Vergleichen der Zeitreihen der Messwerte des minimalen Zuflusses mit der im Schritt b) des Anspruchs 1 bestimmten Regressionskurve (RK), wobei Messwerte, die außerhalb des Vertrauensbereiches (VB1,VB2) liegen, auf das Vorhandensein einer Leckage im Versorgungsnetz hinweisen.

## Claims

1. Method for leakage detection and leakage location in an area of a supply network, comprising the steps:
a) dividing the supply network into areas (DMA) which essentially have a comparable consumption profile, wherein the entire water consumption is measured for each area (DMA);
b) determining a regression curve (RK) of the inflow for areas (DMA) that are comparable in each case, on the basis of past values in respect of which it is assumed that the supply network was free of leaks, by means of robust regression methods, and determining a region of confidence (VB1,VB2) around the regression curve (RK), wherein measurement values within the region of confidence indicate zero leakage;
c) measuring a respective minimal inflow for each area (DMA) within a defined measurement period;
d) generating time series of measurement values of the minimal inflow for selected areas (DMA) over a number of measurement periods, wherein the total consumption is measured for each area (DMA);
e) comparing the time series of the measurement values of the minimal inflow with the regression curve (RK), wherein measurement values lying outside the region of confidence (VB1,VB2) indicate the presence of a leakage in the supply network.

2. Method according to claim 1,
**characterised in that**
the time series of the measurement values are entered into a system of coordinates, wherein each coordinate axis represents an area (DMA), wherein the position of a measurement value relative to a coordinate axis indicates a leakage within the corresponding area (DMA).

3. Method according to one of the preceding claims,
**characterised in that**
the quality of the regression curve (RK) is defined by a robust correlation coefficient.

4. Method according to one of the preceding claims,
**characterised in that**
the areas (DMA) can also be virtual district meter areas.

5. Method according to one of the preceding claims,
**characterised in that**
sliding mean values or the integrated flow are used instead of the measurement values of the minimal inflow of the areas, wherein the total consumption is measured for each area (DMA).

6. Method according to one of the preceding claims,
**characterised in that**
the measurement period is from 02:00 to 04:00 hours, from 00:00 to 24:00 hours and/or from 06:00 to 18:00 hours, for example.

7. Method according to one of the preceding claims,
**characterised in that**
an alarm is triggered if a measurement value lies outside the region of confidence (VB1,VB2).

8. Use of a method according to one of the claims 1 to 7, for an infrastructure network for the transportation of a fluid.

9. Use according to claim 8,
**characterised in that**
the infrastructure network is a water supply network or a gas supply network or a district heating network.

10. Device for using a method according to one of the claims 1 to 7, said device comprising:
a) sensors for measuring a respective minimal inflow for each area (DMA) within a defined measurement period, wherein the total consumption is measured for each area (DMA);
b) means for generating time series of measurement values of the minimal inflow for selected areas (DMA) over a number of measurement periods;
c) means for comparing the time series of the measurement values of the minimal inflow with the regression curve (RK) determined in step b) of claim 1, wherein measurement values lying outside the region of confidence (VB1,VB2) indicate the presence of a leakage in the supply network.

## Revendications

1. Procédé de détection et de localisation de fuites dans une zone d'un réseau d'alimentation, comprenant les étapes suivantes:
a) diviser le réseau d'alimentation en zones (DMA), qui présentent essentiellement un profil de consommation comparable, la consommation totale d'eau pouvant être mesurée pour chaque zone (DMA);
b) déterminer une courbe de régression (RK) du flux entrant pour des zones respectivement comparables (DMA) en se basant sur des valeurs antérieures, pour lesquelles on admet que le réseau d'alimentation ne présentait pas de fuites, par des méthodes de régression robuste et déterminer une région de confiance (VB1, VB2) autour de la courbe de régression (RK), les valeurs de mesure à l'intérieur de la région de confiance n'indiquant aucune fuite;
c) mesurer un flux entrant minimal respectif pour chaque zone (DMA) à l'intérieur d'une période de mesure définie;
d) établir des séries chronologiques de valeurs de mesure du flux entrant minimal pour des zones sélectionnées (DMA) sur un certain nombre de périodes de mesure, la consommation totale étant mesurée pour chaque zone (DMA);
e) comparer les séries chronologiques des valeurs de mesure du flux entrant minimal avec la courbe de régression (RK), des valeurs de mesure qui se situent en dehors de la région de confiance (VB1, VB2) indiquant la présence d'une fuite dans le réseau d'alimentation.

2. Procédé selon la revendication 1, **caractérisé en ce que** l'on porte les séries chronologiques des valeurs de mesure dans un système de coordonnées, dans lequel chaque axe de coordonnées représente une zone (DMA), dans lequel la situation d'une valeur de mesure par rapport à un axe de coordonnées indique une fuite à l'intérieur de la zone correspondante (DMA).

3. Procédé selon l'une des revendications précédentes, **caractérisé en ce que** l'on définit la qualité de la courbe de régression (RK) au moyen d'un coefficient de corrélation robuste.

4. Procédé selon l'une des revendications précédentes, **caractérisé en ce que** les zones (DMA) peuvent être des zones virtuelles de mesure par district.

5. Procédé selon l'une des revendications précédentes, **caractérisé en ce que**, au lieu des valeurs de mesure du flux entrant minimal des zones, on utilise des valeurs moyennes glissantes ou le débit intégré, la consommation totale étant mesurée pour chaque zone (DMA).

6. Procédé selon l'une des revendications précédentes, **caractérisé en ce que** la période de mesure est par exemple de 2.00 à 4.00 heures, de 0.00 à 24.00 heures, et/ou de 6.00 à 18.00 heures.

7. Procédé selon l'une des revendications précédentes, **caractérisé en ce qu'**une alarme est déclenchée lors de l'apparition d'une valeur de mesure située à l'extérieur de la région de confiance (VB1, VB2).

8. Utilisation d'un procédé selon l'une quelconque des revendications 1 à 7, pour un réseau d'infrastructure destiné au transport d'un fluide.

9. Utilisation selon la revendication 8, **caractérisée en ce que** le réseau d'infrastructure est un réseau de distribution d'eau ou un réseau de distribution de gaz ou un réseau de chauffage urbain.

10. Dispositif pour l'utilisation d'un procédé selon l'une quelconque des revendications 1 à 7, le dispositif comprenant:
a) des capteurs pour mesurer un flux entrant minimal respectif pour chaque zone (DMA) à l'intérieur d'une période de mesure définie, la consommation totale étant mesurée pour chaque zone (DMA);
b) des moyens pour établir des séries chronologiques de valeurs de mesure du flux entrant minimal pour des zones sélectionnées (DMA) sur un certain nombre de périodes de mesure;
c) des moyens pour comparer les séries chronologiques des valeurs de mesure du flux entrant minimal avec la courbe de régression (RK) déterminée à l'étape b) de la revendication 1, des valeurs de mesure qui se situent en dehors de la région de confiance (VB1, VB2) indiquant la présence d'une fuite dans le réseau d'alimentation.
